# EUROPÄISCHE PATENTSCHRIFT

(11) **EP 1 587 899 B1**
(45) Veröffentlichungstag und Bekanntmachung des Hinweises auf die Patenterteilung: **27.07.2011**
(21) Anmeldenummer: 04705781.5
(22) Anmeldetag: 28.01.2004
(51) Int. Cl.: C10L 5/44, C10L 5/08, C10L 5/04

(54) **VERFAHREN UND VORRICHTUNG ZUR HERSTELLUNG VON BRENNSTOFFEN AUS GEPRESSTER BIOMASSE UND VERWENDUNG DERSELBEN**
METHOD AND DEVICE FOR PRODUCING FUELS FROM COMPRESSED BIOMASS AND USE OF SAID FUELS
PROCEDE ET DISPOSITIF POUR PRODUIRE DES COMBUSTIBLES A PARTIR DE BIOMASSE COMPRIMEE ET UTILISATION DE CEUX-CI

(30) Priorität: 28.01.2003 EP 03001796
(43) Veröffentlichungstag der Anmeldung: 26.10.2005
(73) Patentinhaber: Werner, Hans, 81825 München (DE)
(72) Erfinder: Werner, Hans, 81825 München (DE)
(74) Vertreter: Leske, Thomas
(86) Internationale Anmeldenummer: PCT/EP2004/000740
(87) Internationale Veröffentlichungsnummer: WO 2004/067685

(56) Entgegenhaltungen:
- EP-A- 0 985 723
- CH-A- 248 748
- DE-A- 10 153 975
- US-A- 4 324 561
- US-A- 4 363 636
- US-A- 5 352 252

## Beschreibung

### Gebiet der Erfindung

Die vorliegende Erfindung betrifft Verfahren und Vorrichtungen zur Herstellung von Brennstoffen aus Biomasse sowie deren Verwendung und insbesondere Brennstoffe, aus zu Granulat, Presslingen, Pellets oder Briketts gepresster Biomasse.

### Hintergrund der Erfindung

Neben fossilen Brennstoffen finden Energieträger in Form von Biomasse in zunehmendem Maße Verwendung. Unter Biomasse werden insbesondere Pflanzen, Pflanzenbestandteile, Biomasse und Nebenprodukte pflanzlicher und tierischer Herkunft und Holz verstanden.

Herkömmlicherweise wird bei Energiegewinnung mittels Biomasse, diese einfach verbrannt. Diese Vorgehensweise hat mehrere Nachteile. Abhängig von der Art zu verbrennender Biomasse können sich Transport, Bevorratung und Handhabung beim Verbrennen insbesondere in Privathaushalten im Vergleich mit fossilen Brennstoffen deutlich komplexer gestalten. Als anschauliches Beispiel sei hier die Verwendung von Stroh als Brennstoff genannt. Des Weiteren können bei dieser Vorgehensweise gesetzliche Regelungen, die Schadstoffemissionen und Wirkungsgrade beim Verbrennen von Biomasse betreffen, bei Verwendung nicht verarbeiteter Biomasse verletzt werden.

Aufgrund seines hohen Energiegehalts stellt Holz eine bevorzugte Biomasse dar. Um auch Holz in Form von Holzabfällen, Späne und dergleichen nutzen zu können, ist es bekannt, so genannte Holzpellets herzustellen und zur Energieerzeugung zu verwenden. Holzpellets bestehen aus gepressten Holzpartikeln. Diese können, vergleichbar zu Kohle-oder Holzkohlebriketts, einfach transportiert, gelagert und beim Verbrennen gehandhabt werden.

Angesichts der vielen verschiedenen Arten von Biomasse und der zunehmenden Forderung nach alternativen Energieträgern, ist es wünschenswert, neben Holz auch aus anderen Biomassen einfach zu transportierende, zu lagernde und beim Verbrennen zu handhabende Brennstoffe bereitzustellen.

Dokument US-A-4 324 561 offenbart ein Verfahren zur Herstellung von Brennstoff aus in Form gepresster Biomasse, bei dem die Biomasse vor einem Formpressvorgang einem Trocknungsvorgang unterworfen wird. Stroh, Landwirtschaftsabfall und andere botanische Stoffe werden als Ausgangsmaterial genennt.

### Aufgabe der Erfindung

Aufgabe der vorliegenden Erfindung ist es, zusätzlich zu Biomasse in Form von Holz bisher nicht genutzte Biomasse zur Herstellung von Brennstoffen zu verwenden und dabei Brennstoffe bereitzustellen, die hinsichtlich ihres Transports, ihrer Lagerung und ihrer Handhabung beim Verbrennen mit Holzpellets vergleichbar sind.

### Kurzbeschreibung der Erfindung

Zur Lösung der oben genannten Aufgabe stellt die vorliegende Erfindung ein Verfahren zur Herstellung von Brennstoffen aus Biomasse, eine Verwendung so hergestellter Brennstoffe und Verwendungen einer Vorrichtung zur Herstellung solcher Brennstoffe bereit.

Bei dem erfindungsgemäßen Verfahren ist es vorgesehen, die Biomasse, und zwar hier vor allem Gras, mittels eines technischen Verfahrens zu trocknen, bevor aus der getrockneten Biomasse Brennstoffe in gepresster Form hergestellt werden. Dabei ist dieses Verfahren zweistufig derart gestaltet, dass das Gras und gegebenenfalls

zuzusetzende andere Biomasse vor dem thermischen Trocknen einem Pressvorgang zur Reduktion des Feuchtegehalts unterworfen wird.

Die Formulierungen "in gepresster Form", "Formpressen" und ähnliche in diesem Zusammenhang verwendete Bezeichnungen werden im Folgenden verwendet, um anzugeben, dass die getrocknete Biomasse gepresst, verpresst, verdichtet und dergleichen wird. Auf diese Weise können Brennstoffe in einstückiger, handhabbarer Form erzeugt werden. Beispiele für so hergestellte Brennstoffe sind aus getrockneter und gepresster Biomasse hergestellte Brennstoffe in Form von Granulat, Presslingen, Pellets, Briketts, und Pressformen größerer Abmessung. Die Form erfindungsgemäßer Brennstoffe hängt beispielsweise davon ab, auf welche Weise bzw. mit welchen Vorrichtungen diese verbrannt werden sollen. So bieten sich für eine Verwendung zum Heizen in Privathaushalten erfindungsgemäße Brennstoffe in Form von Presslingen, Pellets oder Briketts an. Bei Verwendung erfindungsgemäßer Brennstoffe in größeren Energieerzeugungsanlagen, wie zum Beispiel einem Biomassekraftwerk, können Pressformen größeren Volumens verwendet werden. Die Verwendung erfindungsgemäßer Brennstoffe in Form von Granulat erlaubt die Verbrennung derselben beispielsweise in Taschenwärmern.

Die Vorgehensweise, Biomasse vor Herstellung geformter Brennstoffe in zwei Stufen, nämlich zunächst durch Auspressen mechanisch und anschließen thermisch zu trocknen, erlaubt es, beliebige Biomasse unabhängig von ihrem Feuchtegehalt zu verwenden. Bei der bekannten Herstellung von Holzpellets war es bisher erforderlich, Holz mit einem Feuchtegehalt unter vorgegebenen oder gewünschten Grenzwerten zu verwenden. Holz mit zu hohem Feuchtegehalt blieb dabei ebenso unberücksichtigt, wie andere Biomasse, insbesondere in Form von Garten- und Landschaftsbauprodukten und -abfällen. Dies gilt auch für Biomasse in Form von geschnittenem Gras, Getreide und dergleichen, die bisher,zur Energieerzeugung meist nur nach langwieriger, natürlicher Trocknung im Freien als Biomassebrennstoff verwendet wurden, wobei, als weiterer Unterschied zu dem erfindungsgemäßen Verfahren derartige als Brennstoff verwendeten Biomasse meist nicht gepresst oder verdichtet wurde, um z.B. Pellets zu erzeugen. Der bisherige Rückgriff auf Biomasse, die hohe Fett- und/oder Ölanteile aufweist, ist durch die vorliegende Erfindung nicht mehr erforderlich. Die Vorgehensweise, Biomasse, hier in Sonderheit Gras, sowohl zu trocknen als auch zu pressen führt zu Brennstoffen mit gegenüber herkömmlichen Ansätzen erhöhten Brennwerten bzw. Energiegehalten pro Masse und/oder Volumen.

Vorzugsweise wird als Biomasse nur durch Garten- und/oder Landschaftsmaßnahmen erhaltene Biomasse verwendet. Insbesondere ist es vorgesehen, als Biomasse nur solche zu verwenden, die im Garten- und/oder Landschaftsbau anfällt und herkömmlicherweise kompostiert wird. Vorzugsweise wird als Biomasse sehr feuchte oder nasse Biomasse verwendet, die eigentlich zur Brennstoffherstellung nicht geeignet ist.

Vorzugsweise wird als Biomasse nur Pflanzenschnittgut und/oder Blätter und/oder Laub und/oder Gras und/oder Astwerk verwendet. Derartige Biomasse ist bisher nicht zur Herstellung von Brennstoff in Betracht gezogen worden. Vielmehr wurde derartige Biomasse bisher als Abfall betrachtet und allenfalls zum Kompostieren verwendet. Als Biomasse können auch alternativ oder ergänzend Garten- und Landschafsbauprodukte, die gezielt zur Verwendung als Brennstoff angebaut werden, und/oder tierische Abfallprodukte, wie zum Beispiel Pferdemist und Kuhdung, und/oder Meerespflanzen, wie zum Beispiel Algen, verwendet werden.

Um den Trocknungsprozess zu vereinfachen und/oder um Brennstoffe in beliebiger Form herzustellen, ist es bevorzugt, dass die Biomasse vor dem Trocknen zerkleinert wird. Dies kann beispielsweise durch Häckseln, Schreddem und dergleichen erfolgen.

Insbesondere bei Biomasse mit hohem Feuchtegehalt ist erfindungsgemäß vorgesehen, diese vor dem Trocknen zu pressen, um dadurch den durch das anschließende thermische Trocknen zu entfernende Feuchtegehalt zu reduzieren. Um den Pressvorgang zu erleichtern und/oder zu verbessern, kann die Biomasse zuvor zerkleinert werden. Aufgrund des Pressvorgangs kann die durch diesen vorgetrocknete Biomasse eine Beschaffenheit aufweisen, die den eigentlichen Trocknungsvorgang erschwert; so kann die Biomasse nach diesem Pressen beispielsweise verdichtet oder verklumpt sein. In solchen Fällen ist vorgesehen, dass die Biomasse nach diesem Pressvorgang erneut zerkleinert oder auf andere geeignete Weise bearbeitet wird, um eine hinsichtlich des Trocknens unerwünschte Beschaffenheit aufgrund des Pressvorgangs zu beseitigen.

Zum Trocknen der Biomasse können erwärmte Gase, beispielsweise in Form von Heißluft, erwärmten technischen Gasen und Kombinationen derselben, verwendet werden. Insbesondere ist es bevorzugt, zum Trocknen der Biomasse bei anderen Verfahren oder Vorrichtungen entstehende Abwärme zu nutzen, die beispielsweise bei Heizkraftwerken oder in Räumen oder Gebäuden in Privathaushalten oder im industriellen Bereich entsteht. Hierbei können z.B. Wärmepumpen verwendet werden, um Abwärme dem Trocknungsvorgang zuzuführen. Wie unten ausgeführt, ist es auch möglich, zum Trocknen benötigte Energie, wenigstens teilweise, durch Verbrennen erfindungsgemäß hergestellter Brennstoffe zu erzeugen. Alternativ oder ergänzend ist es vorgesehen, zum Trocknen eine Mikrowellenheizung zu verwenden.

Die beim Trocknen verwendeten Temperaturen der Umgebung der Biomasse bzw. die beim Trocknen in der Biomasse erzeugten Temperaturen hängen von der Art der Biomasse, der gewünschten oder vorgegebenen Trocknungsdauer, einem gewünschten oder, beispielsweise gesetzlich, vorgegebenen Wirkungsgrad beim Trocknen ab.

Der Trocknungsvorgang kann auch so durchgeführt werden, dass in der zu verarbeitenden Biomasse vor dem Trocknen enthaltene Stoffe erhalten und/oder abgebaut bzw. entfernt werden. So können beispielsweise Geruchsbelastungen, gesundheitsschädliche oder gesundheitsbedenkliche Emissionen, Raüchentwicklung und dergleichen beim Verbrennen erfindungsgemäß hergestellter Brennstoffe vermieden werden.

Um beim Verbrennen erfindungsgemäß hergestellten Brennstoffs erzeugte Emission zu verringern, falls solche überhaupt erzeugt werden, ist es möglich, Emissionen beim Trocknen der Biomasse zu entfernen. So ist es beispielsweise vorgesehen, beim Trocknen der Biomasse entstehende Gase oder anfallende Flüssigkeiten, beispielsweise in Form von Flüssigkeitspartikeln, abzusaugen und beispielsweise durch geeignete Abgas- bzw. Filtervorrichtungen zu führen und gegebenenfalls als Sondermüll zu entsorgen. Derartige Verfahrensschritte können auch beim Zerkleinern und/oder Pressen der Biomasse durchgeführt werden.

Gemäß einer bevorzugten Ausführungsform wird die Biomasse beim Trocknen unter Druck gesetzt und, beispielsweise nach einer vorgegebenen oder gewünschten Trocknungsdauer, noch im erwärmten Zustand Umgebungsdruck ausgesetzt. Die dabei auftretende Druckänderung bewirkt, dass zusätzlich Feuchtigkeit aus der Biomasse austritt.

Aufgrund der Trocknung der Biomasse vor dem Formpressen ist es möglich, dass unterschiedliche Arten von Biomasse in vermengter Form verwendet werden, ohne dass dabei auf den Feuchtegehalt einzelner Arten zu achten ist. Werden unterschiedliche Arten von Biomasse in vermengter Form verwendet, ist wenigstens der Trocknungsvorgang und vorzugsweise, falls gegeben, auch der bzw. die Zerkleinerungsvorgänge und/oder der Pressvorgang entsprechend auszulegen. Dies kann zwar die einzelnen Verfahrensschritte verlängern und komplexer gestalten, erlaubt es aber, beliebige Biomasse ohne vorherige Trennung in einzelne Arten zu verwenden.

Wenn Biomasse in getrennter Form vorliegt, beispielsweise nach Gras, Holz, Pflanzen und dergleichen getrennt, können die einzelnen Verfahrensschritte für jede Art von Biomasse getrennt durchgeführt werden. Dies erlaubt es die einzelnen Verfahrensschritte auf die jeweilige Art Biomasse optimal abzustimmen und Brennstoff herzustellen, der nur auf einer Art Biomasse basiert.

Wenn für unterschiedliche Arten von Biomasse die einzelnen Verfahrensschritte abgesehen von dem Formpressen durchgeführt sind, können die unterschiedlichen Arten Biomasse vermengt und gemeinsam in Form verpresst werden. Auf diese Weise können Brennstoffe hergestellt werden, die auf unterschiedlichen Arten Biomasse basieren und Biomasse in unterschiedlichen Zusammensetzungen und/oder unterschiedlichen Anteilen enthalten. Eine solche Kombination unterschiedlicher Arten Biomasse erlaubt es, neben Biomasse hohen Heizwerts zu Herstellung eines Brennstoffs auch Biomasse niedrigen Heizwerts zu verwenden, die ansonsten aufgrund ihres niedrigen Heizwerts nicht als alleinige Basis für einen Brennstoff gewählt würde. Auch können unterschiedliche Arten Biomasse zur Herstellung eines Brennstoffs so kombiniert werden, das sich beim Verbrennen Emissionen der unterschiedlichen Biomassearten kompensieren oder so miteinander reagieren, dass unerwünschte Emissionen, die bei getrennter Verbrennung der unterschiedlichen Arten Biomasse entstehen, vermieden werden.

Eine bevorzugte Biomasse zum Herstellen erfindungsgemäßer Brennstoffe ist Gras, das auch z.B. mit Holz umfassender Biomasse kombiniert werden kann. So ist es vorgesehen, mittels des erfindungsgemäßen Verfahrens Graspellets und Gras-Holz-Pellets bzw. in andere Formen gepresstes Gras und Gras-Hotz-Gemenge zu erzeugen.

Vorzugsweise wird als Biomasse nur Gras verwendet.

Bei einer weiteren Ausführungsform wird als Biomasse nur Gras und Holz verwendet.

Diese Arten von Biomasse sind bisher nicht als Biomasse betrachtet worden, die zur Herstellung von Brennstoff geeignet ist. Dies ist unter anderem auf den relativ hohen Feuchtegehalt solcher Biomasse und darauf zurückzuführen, dass diese Biomassearten besonders gut zur Kompostierung geeignet sind, und folglich eine Verwendung gemäß der vorliegenden Erfindung eine grundsätzliche Abkehr von der bisherigen Betrachtung und Verwendung solcher Biomasse darstellt.

Neben der Verwendung herkömmlicher Energiearten zur Durchführung des erfindungsgemäßen Verfahrens, wie z.B. mittels fossiler Brennstoffe erzeugte Energie, Windenergie und Sonnenenergie, ist es vorgesehen, gemäß dem erfindungsgemäßen Verfahren hergestellten Brennstoff zur wenigstens teilweisen Energieversorgung bei der Verfahrensdurchführung zu verwenden. Hierfür können erfindungsgemäß hergestellte Brennstoffe verbrannt werden, um die beim Trocknen von Biomasse benötigte Wärmeenergie wenigstens teilweise bereitzustellen. Ferner ist es möglich, durch Verbrennung erfindungsgemäß hergestellter Brennstoffe elektrische Energie zu erzeugen und diese bei der Verfahrensdurchführung zu verwenden.

Bei der erfindungsgemäßen Verwendung ist es vorgesehen, Brennstoffe, die gemäß einem der oben beschriebenen Verfahren hergestellt sind, zur Erzeugung von Energie in Form von Wärme und/oder Strom durch Verbrennung in einer Feuerungsanlage, einem Ofen, einer Heizungsanlage und dergleichen zu verwenden. Insbesondere sieht es die vorliegende Erfindung vor, aus mittels eines technischen Verfahrens getrocknetem Gras hergestellten erfindungsgemäßen Brennstoff zu verwenden.

Die erfindungsgemäße Vorrichtung zur Herstellung von Brennstoffen aus gepresster Biomasse umfasst eine Einrichtung, mit der die Biomasse getrocknet wird, bevor sie in Form gepresst wird.

Die erfindungsgemäße Vorrichtung umfasst auch eine Einrichtung zum Pressen der Biomasse bevor sie der Trocknungseinrichtung zugeführt wird und gegebenenfalls eine Einrichtung zum Zerkleinern der Biomasse. Dabei ist es vorgesehen, dass die Zerkleinerungseinrichtung der Presseinrichtung vorgeschaltet ist oder umgekehrt oder dass eine Zerkleinerungseinrichtung sowohl vor als auch nach der Presseinrichtung verwendet wird.

Bei einer bevorzugten Ausführungsform der erfindungsgemäßen Vorrichtung umfasst die Trocknungseinrichtung eine Trockenkammer zur Aufnahme der gepressten und gegebenenfalls zerkleinerten Biomasse, die mittels eines erwärmten Gases und/oder mittels einer Mikrowellenheizung so erwärmt wird, dass die Biomasse nach einer Beendigung des Trocknungsvorgangs einen gewünschten oder vorgegebenen Feuchtegehalt aufweist.

Um beispielsweise zu verhindern, dass beim Trocknen entstehende Gase und/oder Fluide austreten können, ist es vorgesehen, die Trocknungseinrichtung während des Trockenvorgangs gas- und/oder fluiddicht zu verschließen. Auf diese Weise können gesammelte Gase und/oder Fluide abgesaugt, abgeführt und, falls erforderlich, entsorgt werden. Wenn beim Trocknen der Biomasse Gase entstehen, erlaubt es diese Ausführungsform der Trocknungseinrichtung, dabei entstehenden Gasdruck zu verwenden, um die Biomasse beim Trocknen, wie oben beschrieben, unter Druck zu setzen.

Mittels einer Einrichtung, um den beim Trocknen auf die Biomasse wirkenden Druck zu steuern, kann der Trocknungsvorgang verbessert werden, wenn beispielsweise nach einer vorgegebenen Zeitdauer die noch erwärmte Biomasse einem Druckabfall ausgesetzt wird.

Insbesondere wenn Biomasse in getrennter Form vorliegt und getrocknet wird, umfasst die erfindungsgemäße Vorrichtung vorzugsweise eine Einrichtung, um die unterschiedlichen Arten getrockneter Biomasse zu vermengen, bevor sie in Form gepresst werden. Alternativ hierzu ist es vorgesehen, dass die erfindungsgemäße Vorrichtung eine Einrichtung aufweist, um die Biomasse vor dem Trocknen, gegebenenfalls auch vor dem Zerkleinern und/oder Pressen, zu vermengen. Letzteres hat den Vorteil, dass in getrennter Form bereitgestellte Arten Biomasse gemeinsam verarbeitet werden können.

Vorzugsweise umfasst die erfindungsgemäße Vorrichtung auch eine Einrichtung, um aus der getrockneten Biomasse in Form gepressten Brennstoff herzustellen. Eine solche Einrichtung kann baueinheitlich integriert oder separat ausgeführt bereitgestellt sein.

Um beispielsweise die erfindungsgemäße Vorrichtung selbst wenigstens teilweise mit Energie zu versorgen, kann diese eine Einrichtung zur Erzeugung von Energie durch

Verbrennung mittels der Vorrichtung hergestellter Brennstoffe aufweisen. Die Energieerzeugungseinrichtung kann beispielsweise eine als der Trocknungseinrichtung thermische Energie bereitstellende Einrichtung (z.B. Ofen) und/oder ein der erfindungsgemäßen Vorrichtung elektrische Energie zuführende Einrichtung sein.

Bei einer erfindungsgemäßen Verwendung wird die obige Vorrichtung zur Herstellung von Brennstoff aus bei Garten- und/oder Landschaftsmaßnahmen erhaltener Biomasse verwendet.

Bei einer weiteren erfindungsgemäßen Verwendung wird die obige Vorrichtung zur Herstellung von Brennstoff Gras und Pflanzenschnittgut und/oder Blättern und/oder Laub und/oder Astwerk verwendet.

Bei weiteren erfindungsgemäßen Verwendungen wird die obige Vorrichtung zur Herstellung von Brennstoff nur aus Gras oder nur aus einem Gras-Holz-Gemenge verwendet.

### Kurzbeschreibung der Figuren

Bei der Beschreibung bevorzugter Ausführungsformen der vorliegenden Erfindung wird auf die beigefügten Figuren Bezug genommen, von denen zeigen:
Fig. 1 eine schematische Darstellung einer bevorzugten Ausführungsform des erfindungsgemäßen Verfahrens zur Herstellung von Brennstoffen aus gepresster Biomasse, und
Fig. 2 eine schematische Darstellung einer bevorzugten Ausführungsform der erfindungsgemäßen Vorrichtung zur Herstellung von Brennstoffen aus gepresster Biomasse.

### Beschreibung bevorzugter Ausführungsformen

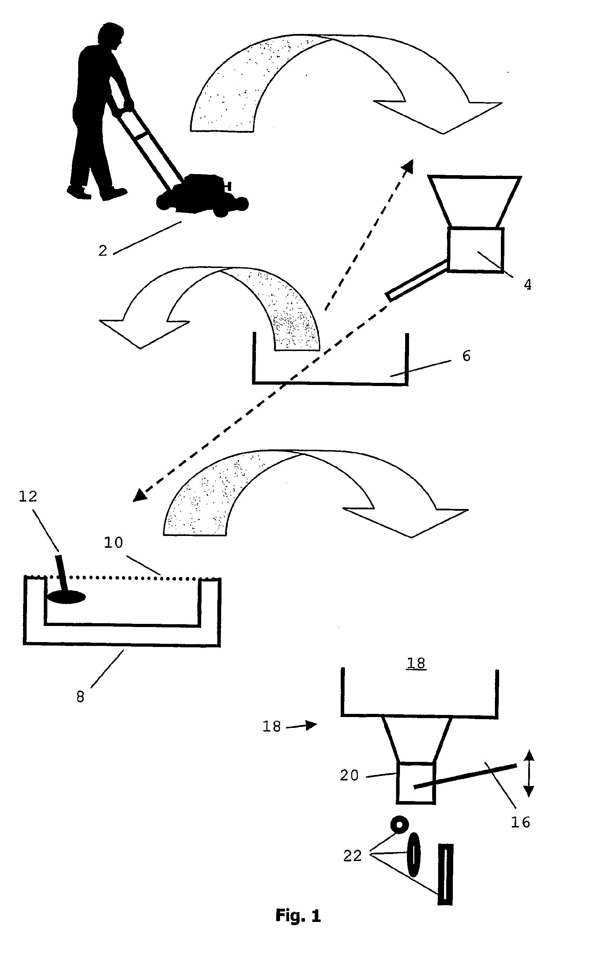

Bezugnehmend auf Fig. 1 wird eine Ausführungsform des Verfahrens zur Herstellung von Brennstoffen aus gepresster Biomasse am Beispiel von Biomasse in Form von Gras erläutert, aus dem Brennstoff in Form von Pellets hergestellt wird. Insbesondere erfolgt diese Erläuterung anhand von in Privathaushalten anfallenden Grasabfällen, die bei Verwendung eines Rasenmähers 2 anfallen.

Beim Rasenmähen angefallenes Gras wird normalerweise durch den Rasenmäher 2 so zerkleinert, dass es ohne weitere Zerkleinerung getrocknet und zu Pellets geformt, d.h. pelletiert werden kann. Wenn beispielsweise aufgrund des verwendeten Rasenmähertyps oder der Länge des zu mähenden Grases Gras anfällt, dessen Länge beim Trocknen oder beim Pelletieren Probleme verursachen kann, wird vor dem Trocknen des Grases eine Zerkleinerungsvorrichtung 4 verwendet. Beispiele für die Zerkleinerungsvorrichtung 4 umfassen Häcksler, Schredder und dergleichen.

Mittels der Zerkleinerungsvorrichtung 4 zerkleinertes Gras oder beim Mähen unmittelbar anfallendes Gras wird, wie unten beschrieben nach Verwendung einer Pressvorrichtung 6, in eine Trocknungsvorrichtung 8 eingebracht.

In der Trocknungsvorrichtung 8 wird das Gras mittels thermischer Energie getrocknet. Die aus Isolationsgründen doppelwandig ausgeführte Trocknungsvorrichtung 8 kann, beispielsweise in der Doppelwand baueinheitlich integriert, eine Mikrowellenheizung und/oder elektrisch betriebene Heizwendeln aufweisen. Aus energetischer Sicht ist es allerdings vorteilhaft, die zum Trocknen verwendete thermische Energie unter Verwendung einer nicht dargestellten Fotovoltaikanlage zu erzeugen.

Eine einfache Weise, dem in der Trocknungsvorrichtung 8 aufgenommenen Gras thermische Energie zuzuführen, besteht darin, die Trocknungsvorrichtung 8 mit einer lichtdurchlässigen Abdeckung 10 zu versehen. Vergleichbar zu einem aus dem Bereich der Imkerei bekannten Sonnenwachsschmelze erzeugt durch die Abdeckung 10 einfallendes Sonnenlicht in der Trocknungsvorrichtung 8 Temperaturen, die ausreichen, um das dort aufgenommene Gras zu trocknen.

Beim Trocknen des Grases anfallender Wasserdampf, Wasserpartikel und Wasser können über in dieser Figur nicht dargestellte Gas- und Wasserablässe entfernt werden. Um festzustellen, ob das Gas in der Trocknungsvorrichtung 8 ausreichend lange getrocknet wurde, das heißt einen zum Pelletieren geeigneten Feuchtegehalt aufweist, kann eine als separate Komponente oder mit der Trocknungsvorrichtung 8 baueinheitlich integriert Feuchtigkeitserfassungsvorrichtung 12 verwendet werden. Unter Berücksichtigung der hier angenommenen Anwendung im Privathaushalt könnte diese Überprüfung auch manuell durchgeführt werden.

Um das Trocknen zu verkürzen und/oder den dabei erforderlichen Energieaufwand zu reduzieren, wird das Gras vor dem Trocknen in einer Pressvörrichtung 6 gepresst, um dadurch Feuchtigkeit und Wasser zu entfernen. Hierfür können z.B. Pressen verwendet werden, die bei Verarbeitung von Oliven, Weintrauben etc. eingesetzt werden. Aufgrund dieses Pressvorgangs kann das Gras verklumpen oder verkleben, was den Trocknungsvorgang erschweren kann. Um dies zu verhindern, kann das gepresste, "vorgetrocknete" Gras zum erneuten Zerkleinern in die Zerkleinerungseinrichtung 4 eingebracht werden, um eine Beschaffenheit zu erreichen, die den Trocknungsvorgang unterstützt. Dieser Vorgang ist in Fig. 1 durch die gestrichelten Pfeile von der Pressvorrichtung 6 zu der Zerkleinerungsvorrichtung 4 und von dieser zu der Trocknungsvorrichtung 8 angedeutet.

Nach dem Trocknen wird das Gras von der Trocknungsvorrichtung 8 in eine Pelletiervorrichtung 14 eingebracht, die hier als mittels eines Hebels 16 manuell Betätigbare dargestellt ist. Bei Betätigung des Hebels 16 wird eine vorgegebene Menge getrockneten Grases aus einem Vorratsbehälter 18 in die eigentliche Pelletiereinrichtung 20 der Pelletiervorrichtung 14 eingebracht und dort zu einem oder gleichzeitig zu mehreren Pellets geformt. Dieser Vorgang wiederholt sich, bis das gesamte getrocknete Gras aus dem Vorratsbehälter 18 pelletiert ist.

Die so hergestellten Pellets 22, die in Abhängigkeit der Ausführung der Pelletiereinrichtung 20, wie in Fig. 1 dargestellt, unterschiedliche Formen haben können, verlassen die Pelletiervorrichtung 14 und können zur Energieerzeugung verbrannt werden, um beispielsweise mittels Biomasseöfen zu heizen.

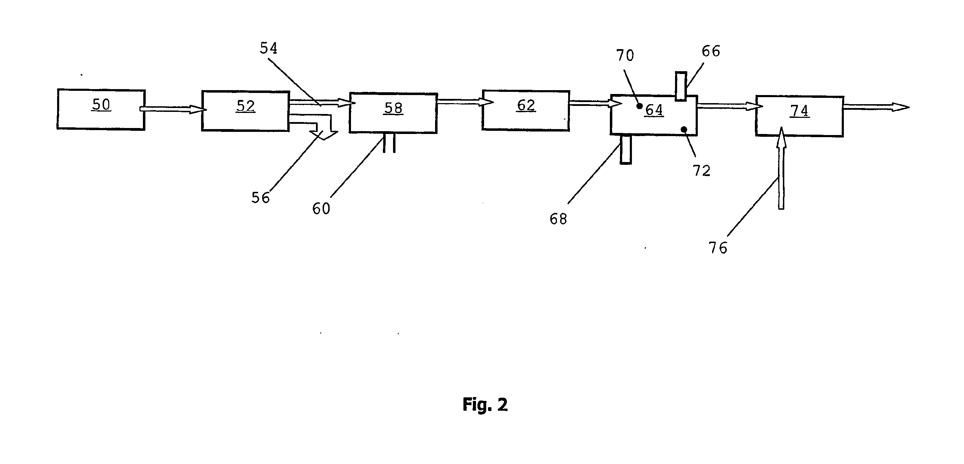

Bezugnehmend auf Fig. 2 wird eine Vorrichtung zur Herstellung von Brennstoffen aus gepresster Biomasse in Form brennbarer Pellets aus Gras sowie deren Betrieb beschrieben, die für eine Pelletherstellung im industriellen Maßstab geeignet ist.

Biomasse wird in einer Sammeleinrichtung 50, beispielsweise einem Container, gesammelt. Die in der Sammeleinrichtung 50 aufgenommene Biomasse kann unterschiedlicher Art und/oder Herkunft sein und in vermengter Form vorliegen. Der Einfachheit halber wird im Folgenden angenommen, dass in der Sammeleinrichtung 50 eine Art Biomasse, nämlich Gras, aufgenommen ist, das, wie im Folgenden beschrieben, verarbeitet und vor dem Pelletieren mit einer anderen Art Biomasse einer anderen Art vermengt werden kann.

Das Gras wird von der Sammeleinrichtung 50 zu einer Zerkleinerungseinrichtung 52 befördert, die beispielsweise ein Schredder, Häcksler etc. sein kann. Um möglicherweise in dem Gras enthaltene Verunreinigungen, wie zum Beispiel Steine, Erdreich und dergleichen, zu entfernen, ist es vorgesehen, dass die Zerkleinerungseinrichtung 52 baueinheitlich integriert oder nachgeschaltet eine in dieser Figur nicht bezeichnete Einrichtung aufweist, um zerkleinertes Gras und Verunreinigung getrennt weiter zu befördern. Dies ist in Fig. 2 durch den die Beförderung zerkleinerten Grases angebenden Pfeil 54 und durch den die Entfernung von Verunreinigungen angebenden Pfeil 56 angedeutet.

Das zerkleinerte Gras wird von der Zerkleinerungseinrichtung 52 zu einer Presseinrichtung 58 befördert, um dem Gras durch Pressen Wasser zu entziehen. Dabei anfallendes Wasser oder andere Fluide werden über einen Ablass 60 entfernt.

Falls aufgrund des Pressvorgangs in der Presseinrichtung 58 das Gras eine Beschaffenheit aufweist, die dessen Trocknung erschweren und insbesondere die Trockendauer verlängern und/oder einen höheren Energieaufwand beim Trocknen erfordern kann, wird das Gras nach Verlassen der Presseinrichtung 58 einer weiteren Zerkleinerungseinrichtung 62 zugeführt.

Das so vorgetrocknete Gras wird von der Einrichtung 60 zu einer Trocknungseinrichtung 64 befördert, wo es mittels eines oder mehreren erwärmten Gasen (z.B. Heißluft), mittels einer Mikrowellenheizung, mittels einer elektrischen Heizung und/oder dergleichen erwärmt wird. Beim Trocknen entstehende Dämpfe, insbesondere Wasserdampf, und anfallendes Wasser oder anfallende Feuchtigkeit können über einen Abgaskanal 66 bzw. einen Fluidablasskanal 68 entfernt werden. Mittels eines Temperatursensors 70 kann die Temperatur des zu trocknenden Grases und/oder der in der Trocknungseinrichtung 64 vorhandenen Umgebung gemessen werden, um beispielsweise eine unerwünschte Entzündung des Grases zu verhindern und den Trocknungsvorgang zu steuern. Um zu überprüfen, ob das in der Trocknungseinrichtung 64 zu trocknende Gras einen gewünschten oder geforderten Feuchtegehalt aufweist, wird eine Feuchtigkeitsmesseinrichtung 72 verwendet.

Beim Trocknen des Grases in der Trocknungseinrichtung 64 kann das Gras unter einem gegenüber dem Umgebungsdruck erhöhten Druck erwärmt werden. Wird gegen oder am Ende des Trocknungsvorgangs der Druck auf Umgebungsdruck reduziert, tritt aufgrund des Druckunterschieds zwischen dem erwärmten Gras und dessen Umgebung Wasser, falls noch vorhanden, aus dem Gras aus.

Nach Beendigung des Trocknungsvorgangs wird das getrocknete Gras von der Trocknungseiririchtung 64 in eine Pelletiereinrichtung 74 befördert und zu Pellets geformt.

Um nicht nur Gras umfassende Pellets herzustellen, ist es möglich, die Verarbeitung von Biomassen bis zum Abschluss des Trocknungsvorgangs beschrieben ist, für eine andere Art Biomasse separat durchzuführen. Dies kann nacheinander unter Verwendung der Einrichtungen 50, 52, 58, 62 und 64 oder im Wesentlichen zeitgleich, parallel in diesen entsprechenden zusätzlichen Einrichtungen durchgeführt werden. Der letztere Fall ist in Fig. 2 durch den mit 76 bezeichneten Pfeil angedeutet, der die Zufuhr einer anderen getrockneten, optional zerkleinerten und/oder gepressten, Art Biomasse veranschaulicht. Diese wird mit dem von der Trocknungseinrichtung 64 erhaltenen Gras in einer nicht dargestellten Einrichtung vermengt und der Pelletiereinrichtung 74 zugeführt, um Pellets herzustellen, die auf unterschiedlichen Arten Biomasse basieren. Auf diese Weise ist es beispielsweise möglich, Pellets herzustellen, die Gras und Holz umfassen.

## Patentansprüche

1. Verfahren zur Herstellung von Brennstoff aus in Form gepresster Biomasse, bei dem die Biomasse vor einem Formpressvorgang einem Trocknungsvorgang unterworfen wird, **dadurch gekennzeichnet, dass** als Biomasse Gras verwendet wird, das vor dem Trocknungsvorgang einem Pressvorgang zur Reduktion des Feuchtegehalts unterworfen wird.

2. Verfahren nach Anspruch 1, bei dem das Gras vor dem Pressvorgang einem ersten Zerkleinerungsvorgang unterworfen wird.

3. Verfahren nach Anspruch 1 oder 2, bei dem das Gras einem dem Pressvorgang nachgelagerten zweiten Zerkleinerungsvorgang unterworfen wird.

4. Verfahren nach einem der vorherigen Ansprüche, bei dem das Gras mittels eines erwärmten Gases getrocknet wird.

5. Verfahren nach einem der vorherigen Ansprüche, bei dem das Gras mittels einer Mikrowellenheizung getrocknet wird.

6. Verfahren nach einem der vorherigen Ansprüche, bei dem das Gras zum Trocknen unter Druck erwärmt und danach im erwärmten Zustand Umgebungsdruck ausgesetzt wird.

7. Verfahren nach einem der vorherigen Ansprüche, bei dem Gras unterschiedlicher Art und/oder Herkunft verwendet wird, das in vermengter Form vorliegt.

8. Verfahren nach einem der vorigen Ansprüche, bei dem in getrennter Form vorliegendes Gras unterschiedlicher Art und/oder Herkunft getrennt getrocknet und erst zum Formpressen vermengt wird oder bei dem Gras einer Art und/oder Herkunft verarbeitet wird.

9. Verfahren nach einem der vorherigen Ansprüche, bei dem beim Formpressen des Grases Granulat, Presslinge, Pellets oder Brickets hergestellt werden.

10. Verfahren nach einem der vorherigen Ansprüche, bei dem dem Gras vor dem Formpressvorgang andere durch Garten- und Landschaftsmaßnahmen erhaltene Biomasse hinzugefügt wird.

11. Verfahren nach einem der vorherigen Ansprüche, bei dem dem Gras vor dem Formpressvorgang Pflanzenschnittgut und/oder Blätter und/oder Laub und/oder Astwerk hinzugefügt werden.

12. Verfahren nach einem der vorherigen Ansprüche, bei dem bei dessen Durchführung erforderliche Energie wenigstens teilweise durch Verbrennen gemäß dem Verfahren hergestellten Brennstoffs erzeugt wird.

13. Verwendung von gemäß dem Verfahren nach einem der vorherigen Ansprüche hergestellten Brennstoffs zur Erzeugung thermischer und/oder elektrischer Energie durch Verbrennung.

14. Verwendung einer Vorrichtung mit einer Einrichtung zum Trockenen (8, 64) der Biomasse, und einer der Trocknungseinrichtung (8, 64) nachgeschaltenen Einrichtung (74) zum Formpressen der Biomasse, wobei die Trocknungseinrichtung (8, 64) zur Trocknung von Gras ausgelegt ist und der Trocknungseinrichtung eine Einrichtung zum Pressen (58) des Grases zur Verminderung seines Feuchtegehalts vorgeschaltet ist, zur Durchführung des Verfahrens nach einem der vorherigen Ansprüche.

15. Verwendung nach Anspruch 14, wobei die Vorrichtung eine der Presseinrichtung (58) vorgeschaltete erste Einrichtung (4, 52) zum Zerkleinern der Grase umfasst.

16. Verwendung nach einem der Ansprüche 14 oder 15, wobei die Vorrichtung eine der Presseinrichtung (58) nachgeschaltete und der Trocknungseinrichtung (8, 64) vorgeschaltete zweite Einrichtung (4, 62) zum Zerkleinern des Grases umfasst.

17. Verwendung nach einem der Ansprüche 14 bis 16, wobei
- die Trocknungseinrichtung (8, 64) eine mittels eines erwärmten Gases und/oder einer elektrischen Heizung und/oder mittels einer Mikrowellenheizung erwärmbare Trockenkammer umfasst, und/oder
- die Trocknungseinrichtung (8, 64) zum Trockenen gas- und/oder fluiddicht verschließbar ist und/oder
- die Trocknungseinrichtung (8, 64) eine Einrichtung umfasst, um auf die Biomasse beim Trocknen wirkenden Druck zu steuern, und/oder
- die Vorrichtung eine Einrichtung zur Erzeugung thermischer und/oder elektrischer Energie durch Verbrennung mittels der Vorrichtung hergestellten Brennstoffs umfasst, und/oder
- die Vorrichtung eine Einrichtung zur Erzeugung thermischer und/oder elektrischer Energie durch Verbrennung mittels der Vorrichtung hergestellten Brennstoffs umfasst, wobei die Energieerzeugungseinrichtung zur Energieversorgung beim Betrieb der Vorrichtung dient.

## Claims

1. Method for producing fuel from moulded biomass in which the biomass, before a compression moulding process, is subjected to a drying process, **characterized in that**, as biomass, grass is used which, before the drying process, is subjected to a pressing process for reducing the moisture content.

2. Method according to Claim 1, in which the grass, before the pressing process, is subjected to a first comminution process.

3. Method according to Claim 1 or 2, in which the grass is subjected to a second comminution process connected downstream of the pressing process.

4. Method according to one of the preceding claims, in which the grass is dried by means of a warmed gas.

5. Method according to one of the preceding claims, in which the grass is dried by means of a microwave heater.

6. Method according to one of the preceding claims, in which the grass is warmed for drying under pressure and thereafter exposed to ambient pressure in the warmed state.

7. Method according to one of the preceding claims, in which grass of different types and/or origins is used which is present in mixed form.

8. Method according to one of the preceding claims, in which grass of different types and/or origins present in separate form is dried separately and not mixed until used for compression moulding or in which grass of one type and/or origin is processed.

9. Method according to one of the preceding claims, in which, on compression moulding of the grass, granules, mouldings, pellets or briquettes are produced.

10. Method according to one of the preceding claims, in which other biomass obtained by horticultural and landscaping measures is added to the grass before the compression moulding process.

11. Method according to one of the preceding claims, in which plant cutting material and/or leaves and/or foliage and/or branches are added to the grass before the compression moulding process.

12. Method according to one of the preceding claims, in which energy to carry it out is generated at least in part by burning fuel produced according to the method.

13. Use of fuel produced according to the method according to one of the preceding claims for generating thermal and/or electrical energy by combustion.

14. Use of a device having a unit for drying (8, 64) the biomass, and a unit (74) that is connected downstream of the drying unit (8, 64) and is for compression moulding the biomass, wherein the drying unit (8, 64) is designed for drying grass and a unit for pressing (58) the grass for reducing its moisture content is connected upstream of the drying unit, for carrying out the method according to one of the preceding claims.

15. Use according to Claim 14, wherein the device comprises a first unit (4, 52) for comminuting the grasses which is connected upstream of the pressing unit (58).

16. Use according to either of Claims 14 and 15, wherein the device comprises a second unit (4, 62) for comminuting the grass which is connected downstream of the pressing unit (58) and upstream of the drying unit (8, 64).

17. Use according to one of Claims 14 to 16, wherein
- the drying unit (8, 64) comprises a drying chamber which is warmable by means of a warmed gas and/or an electrical heater and/or by means of a microwave heater, and/or
- the drying unit (8, 64) can be sealed gas-tightly and/or fluid-tightly for drying, and/or
- the drying unit (8, 64) comprises a unit for controlling the pressure acting on the biomass during drying, and/or
- the device comprises a unit for generating thermal and/or electrical energy by combustion of fuel produced by means of the device, and/or
- the device comprises a unit for generating thermal and/or electrical energy by combustion of fuel produced by means of the device, wherein the energy production unit serves for energy supply during operation of the device.

## Revendications

1. Procédé de fabrication d'un combustible à partir d'une biomasse comprimée dans un moule, selon lequel la biomasse est soumise à un processus de séchage avant un processus de moulage par compression, **caractérisé en ce que** de l'herbe est utilisée en tant que biomasse, qui est soumise à un processus de compression pour réduire la teneur en humidité avant le processus de séchage.

2. Procédé selon la revendication 1, selon lequel l'herbe est soumise à un premier processus de broyage avant le processus de compression.

3. Procédé selon la revendication 1 ou 2, selon lequel l'herbe est soumise à un second processus de broyage situé en aval du processus de compression.

4. Procédé selon l'une quelconque des revendications précédentes, selon lequel l'herbe est séchée au moyen d'un gaz chauffé.

5. Procédé selon l'une quelconque des revendications précédentes, selon lequel l'herbe est séchée au moyen d'un chauffage à micro-ondes.

6. Procédé selon l'une quelconque des revendications précédentes, selon lequel l'herbe est chauffée sous pression pour le séchage, puis exposée à la pression ambiante à l'état chauffé.

7. Procédé selon l'une quelconque des revendications précédentes, selon lequel des herbes de type différent et/ou d'origine différente sont utilisées, qui se présentent sous forme mélangée.

8. Procédé selon l'une quelconque des revendications précédentes, selon lequel une herbe d'un type différent et/ou d'une origine différente présente sous forme séparée est séchée séparément et n'est mélangée que lors du moulage par compression ou selon lequel une herbe d'un type et/ou d'une origine est traitée.

9. Procédé selon l'une quelconque des revendications précédentes, selon lequel un granulat, des moulages, des pellets ou des briquettes sont fabriqués lors du moulage par compression de l'herbe.

10. Procédé selon l'une quelconque des revendications précédentes, selon lequel une autre biomasse obtenue par des mesures horticoles et paysagères est ajoutée à l'herbe avant le processus de moulage par compression.

11. Procédé selon l'une quelconque des revendications précédentes, selon lequel des produits végétaux coupés et/ou des feuilles et/ou du feuillage et/ou des branches sont ajoutés à l'herbe avant le processus de moulage par compression.

12. Procédé selon l'une quelconque des revendications précédentes, selon lequel l'énergie nécessaire pour sa réalisation est générée au moins en partie par combustion du combustible fabriqué selon le procédé.

13. Utilisation du combustible fabriqué par le procédé selon l'une quelconque des revendications précédentes pour la génération d'énergie thermique et/ou électrique par combustion.

14. Utilisation d'un dispositif muni d'un appareil pour le séchage (8, 64) de la biomasse, et d'un appareil (74) connecté en aval de l'appareil de séchage (8, 64) pour le moulage par compression de la biomasse, l'appareil de séchage (8, 64) étant conçu pour le séchage d'herbe et un appareil pour la compression (58) de l'herbe pour réduire sa teneur en humidité étant connecté en amont de l'appareil de séchage, pour la réalisation du procédé selon l'une quelconque des revendications précédentes.

15. Utilisation selon la revendication 14, dans laquelle le dispositif comprend un premier appareil (4, 52) pour le broyage des herbes, connecté en amont de l'appareil de compression (58).

16. Utilisation selon l'une quelconque des revendications 14 ou 15, dans laquelle le dispositif comprend un second appareil (4, 62) pour le broyage de l'herbe, connecté en aval de l'appareil de compression (58) et connecté en amont de l'appareil de séchage (8, 64).

17. Utilisation selon l'une quelconque des revendications 14 à 16, dans laquelle
- l'appareil de séchage (8, 64) comprend une chambre de séchage chauffable au moyen d'un gaz chauffé et/ou d'un chauffage électrique et/ou au moyen d'un chauffage à micro-ondes, et/ou
- l'appareil de séchage (8, 64) pour le séchage peut être fermé de manière étanche aux gaz et/ou aux fluides et/ou
- l'appareil de séchage (8, 64) comprend un appareil destiné à réguler la pression agissant sur la biomasse pendant le séchage et/ou
- le dispositif comprend un appareil pour la génération d'une énergie thermique et/ou électrique par combustion du combustible fabriqué au moyen du dispositif et/ou
- le dispositif comprend un appareil pour la génération d'une énergie thermique et/ou électrique par combustion du combustible fabriqué au moyen du dispositif, l'appareil de génération d'énergie servant à l'approvisionnement en énergie pendant l'exploitation du dispositif.
